# EUROPEAN PATENT APPLICATION

(11) **EP 4 632 973 A1**
(43) Date of publication of application: **15.10.2025**
(21) Application number: 24382367.1
(22) Date of filing: 09.04.2024
(51) Int. Cl.: H02G 1/10, F03D 80/80, F16L 3/22, H02G 9/12, H02G 15/14, H02G 9/02, H01B 7/22, H02G 1/08

(54) **A PROTECTOR AND A METHOD FOR PROTECTING A PORTION OF A CABLE**

(71) Applicant: Fundación Tecnalia Research & Innovation, 20009 Donastia-San Sebastían Gipuzkoa (ES); Universidad del Pais Vasco - Euskal Herriko Unibertsitatea (UPV/EHU), 48940 Leioa (ES)
(72) Inventor: RICO, Antonio, 20009 Donostia-San Sebastián (GIPUZKOA) (ES); BERQUE, Joannès, 20009 Donostia-San Sebastián (GIPUZKOA) (ES); LLORENTE, Jose Ignacio, 48940 Leioa - BIZKAIA (ES)
(74) Representative: Balder IP Law, S.L.

(57) **Abstract**

The invention relates to a protector for a portion of an underwater electricity-carrying, fluid-carrying and/or data-carrying cable and to a method for protecting a portion of the cable. The protector comprises:
- a cover (1) comprising a first open end (2) for receiving a cable (7) and a second open end (3) for receiving a cable (7); the cover comprising a groove (4) from the first end (2) to the second end (3); the groove (4) being for housing a portion of a cable; the groove (4) comprising a first opening (41) of the cover (1) from the first end (2) of the cover to the second end (3) of the cover, the first opening (41) being for introducing a portion of a cable into the groove (4); and
- a supporting body (6) for supporting a cable, the supporting body (6) comprising a blocking device (61, 23); the supporting body (6) being attachable to a cable so that when the supporting body (6) is attached to the cable the blocking device (61, 23) comprises a section having a direction outwards from the cable (7);
wherein the groove (4) comprises a narrow portion (5); the cover (1) comprises a second opening for introducing the blocking device (61, 23) into the groove (4); the blocking device (61, 23) being small enough with respect to the groove to move within the groove from the second opening to the narrow portion (5) of the groove.

## Description

### TECHNICAL FIELD

The present invention is encompassed within the field of protectors for cables for carrying at least one of electricity, fluid (e.g., hydrogen) and data, particularly, within the field of protectors for cables being, at least partially, submerged in water.

### BACKGROUND

Underwater electricity-carrying cables are known in the art. These cables carry electricity, and at least a portion of these cables is placed submerged in water. These cables can be used to electrically connect an offshore structure with another offshore structure or with land (e.g., with the electricity mains). An example of these cables is an umbilical cable, for example, an umbilical cable electrically connected to an offshore wind turbine. The umbilical cable carries electrical energy generated by the offshore wind turbine through water. Therefore, if the cable does not work properly (e.g., if the cable breaks), electricity may be unsuccessfully carried by the cable (e.g., the cable may not carry electrical energy generated by the wind turbine).

It is known to use protectors attached to the supporting structure (e.g., a floating supporting structure) of the wind turbine to protect the umbilical cable where it rises from the sea level. Protectors known as "I-tubes" and "J-tubes" are tubes, usually made of steel, which respectively have an "I-shape" and a "J-shape".

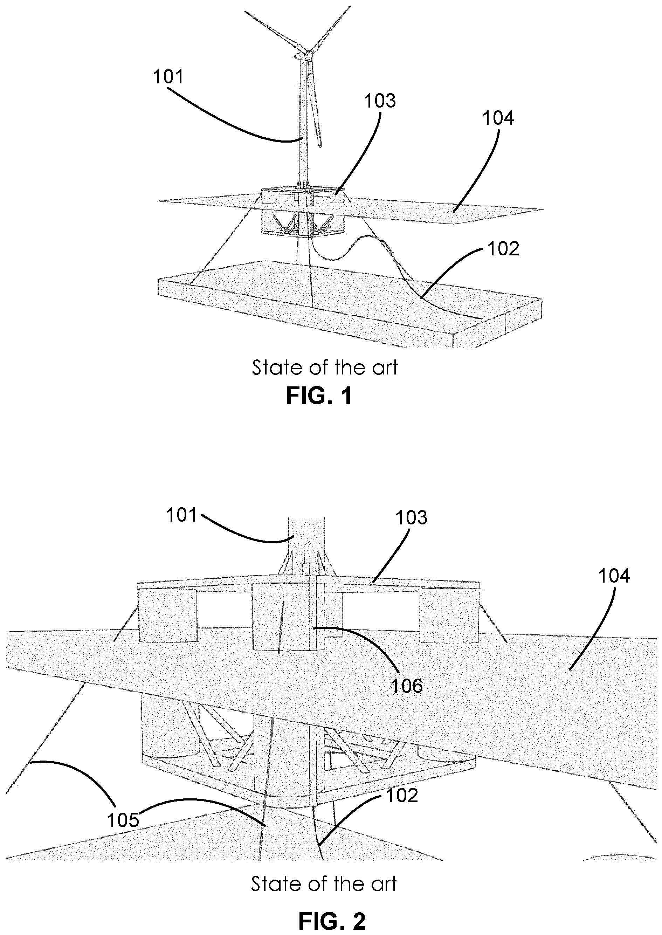

Figures 1 and 2 are known in the art and show an example of an "I-tube" 106 attached to a supporting structure 103 of an offshore wind turbine 101. The supporting structure 103 is floating in water 104. The supporting structure 103 is comprises anchors and mooring lines 105. An umbilical cable102 is connected to the wind turbine 101, so that the umbilical cable 102 carries electrical energy generated by the wind turbine 101. A portion of the umbilical cable 102 is within the I-tube 106.

Covering a portion of the cable 102 with the tube 106 allows enhancing protection of the cable from impacts with boats or other objects moving in the water. However, for installing the cable in the tube, it is required to perform complex handling of the cable. The complexity is caused, at least in part, because the handling is performed offshore.

In particular, known ways of installing the cable in the tube consume longer time and are more expensive than desirable. In addition, the known ways usually pull (exert traction) on the cable to make the cable pass through the inside of the tube. Thereby, subjecting the cable to undesirable stress and friction with the tube, which may wear the cable, decreasing the lifetime of the cable, an even breaking the cable during the installation.

A further problem is that, once the cable has been installed in the tube, maintenance or replacement of the cable (e.g., due to breakage of the cable) may require deinstalling the cable from the tube. Deinstallation of the cable from the tube may be more complex and expensive than desirable for reasons similar to those of the installation.

An additional problem is that, for installing the cable in the tube, it may be required to firmly fix the cable with the tube. This fixation causes undesirable concentration of mechanical loads (e.g., mechanical loads due to water wave, wind, tide changes and/or, even, movement of the support of the wind turbine) in the fixation portion of the cable. These loads may particularly wear the cable when the fixation portion is particularly small. Fatigue loads may be particularly relevant in the wearing process of the cable.

### SUMMARY

A first aspect of the disclosure relates to a protector for a portion of an underwater electricity-carrying, fluid-carrying and/or data-carrying cable, the protector comprising:
- a cover comprising a first open end for receiving a cable and a second open end for receiving a cable; the cover comprising a groove from the first end to the second end; the groove being for housing a portion of a cable; the groove comprising a first opening of the cover from the first end of the cover to the second end of the cover, the first opening being for introducing a portion of a cable into the groove; and
- a supporting body for supporting a cable, the supporting body comprising a blocking device; the supporting body being attachable to a cable so that when the supporting body is attached to the cable the blocking device comprises a section having a direction outwards from the cable;
   wherein the groove comprises a narrow portion; the cover comprises a second opening for introducing the blocking device into the groove; the blocking device being small enough with respect to the groove to move within the groove from the second opening to the narrow portion of the groove.

The protector facilitates installation of the cable. In particular, the first opening together with the first open end and the second open end facilitate introduction of the cable into the groove, thereby facilitating handling of the cable and of the protector in the installation/deinstallation of the cable in the protector, and decreasing risk of damaging the cable in the installation/deinstallation.

In addition, the blocking device comprising the section having a direction outwards from the cable, facilitates installing/deinstalling a cable in/from the protector, decreasing risk of damaging the cable in the installation/deinstallation, and also allows minimizing wearing of the cable while the cable is installed in the protector. As described in the present disclosure, this may be achieved with the narrow portion of the groove acting as a stop of the blocking device, so that the blocking device blocks downwards movement of the cable but does not necessarily block upwards movement of the cable. Since the first opening is suitable for introducing a portion of a cable into the groove, the first opening is bigger than the cable (e.g., a width of the first opening is greater than a width, e.g. a diameter, of the cable) to allow introducing the cable through the first opening.

In some embodiments, the cover is a tube comprising the groove. In the context of the present disclosure, the term "tube" does not necessarily refer to a body having a cylindrical shape (i.e., the cover does not necessarily have a C-shaped cross-section) although in some embodiments the term "tube" refers to a body having a cylindrical shape. In particular, the term "tube" refers to a hollow body having an inner surface, wherein the inner surface of the hollow body is not necessarily cylindrical; although, in some embodiments, the inner surface of the hollow body is cylindrical. In particular, the term "tube" refers to a hollow body having an outer surface, wherein the outer surface of the hollow body is not necessarily cylindrical; although, in some embodiments, the outer surface of the hollow body is cylindrical.

Since the blocking device comprises a section outwards from the cable (i.e., the blocking device is wider than the cable when attached to the cable), the groove may comprise portions which are not big enough to introduce the blocking device through said portions of the groove. Therefore, a second opening is required for introducing the blocking device into the groove.

Since the second opening is suitable for introducing the blocking device into the groove, the second opening is bigger than the blocking device to allow introducing the blocking device through the second opening.

In some embodiments, the second opening is the first open end or the second opening is an enlarged portion of the first opening.

The second opening may be a portion of the first opening, the portion of the first opening being bigger than other portions of the first opening. Thereby, it is not required, e.g., to provide a big first open end of the cover.

The second opening may be the first open end of the cover. In this way, it is not required, e.g., to enlarge a portion of the first opening. In addition, it is apparent from the description below that it may be easier to introduce stabilizers through the first open end than through an enlarged portion of the first opening.

Once the blocking device is introduced into the groove through the second opening, the blocking device can move within the groove from the second opening to the narrow portion of the groove. Preferably, the blocking device has a shape complementary to a shape of the groove, so that the groove guides movement, within the groove, of the blocking device.

A groove that guides movement of the blocking device allows minimizing force of impacts between the blocking device and the cover in the installation of the cable in the protector.

The groove at the location of the narrow portion is big enough to allow that the cable goes through the narrow portion, so that as the blocking device moves towards the narrow portion, the cable may move through the narrow portion.

The narrow portion of the groove is narrow enough to prevent that the blocking device goes through the narrow portion (i.e., the narrow portion blocks movement of the blocking device through the narrow portion). The groove at the narrow portion is smaller than the blocking device, thereby allowing blocking movement of the blocking device through the narrow portion.

In some embodiments, the narrow portion is at the second end of the cover. For example, the narrow portion may be an integral portion of the cover (the cover and the narrow portion are formed as a unit).

In some embodiments, the narrow portion is a lid of the cover, the lid having a slot for receiving a cable.

A narrow portion allowing that the blocking device has one or more degrees of freedom of movement when the blocking device is in contact with (e.g., rests on) the narrow portion may be advantageous for decreasing stress to which the cable is subjected as a result of perturbances, for example, wind, waves and/or tide changes, since some energy of the perturbances is absorbed by said movement of the supporting body.

In some embodiments:
- the blocking device comprises a convex outer surface; and
- the narrow portion has a concave outer surface for contacting the convex outer surface of the blocking device.

These convex-concave shapes of the blocking device and of the narrow portion allow minimizing fatigue caused by bending loads at the blocking device (i.e., when the blocking device rests on the narrow portion). A reason for this, is that these shapes may allow rotation of the blocking device with respect to the cover in any direction at least to certain extent.

For example, the convex outer surface may have a shape of a surface of a sphere. For example, the concave surface may have a shape of a surface of a sphere, for example, a shape matching the shape of the convex outer surface.

In some embodiments, the blocking device is directly attachable to a cable. In this way, the supporting body may be simple in the sense that the blocking device may be directly attached to the cable so that the supporting body does not require additional components for attaching the blocking device to the cable.

In some embodiments, the supporting body comprises hanging means and a device attachable to a cable for attaching the blocking device to the cable, wherein the hanging means attach the blocking device to the device attachable to a cable.

The device attachable to a cable, for example, directly attachable to a cable, can be used to attach the supporting body to the cable.

The hanging means comprises, for example, chains, ropes and/or wires.

Since the hanging means have a relatively low bending stiffness, they allow minimizing, and even preventing, bending stress in the points of attachment of the cable. Providing hanging means allow movement (e.g., rotation of the supporting body with respect to the cover at least to a certain extent, for example, rotation of the device attachable to the cable) of the supporting body with respect to the cover, thereby minimizing fatigue of the supporting body (e.g., due to wind, waves and/or tide change). The narrow portion is big enough to allow that the hanging means go through the narrow portion when the blocking device is in contact with (e.g., rests on) the narrow portion.

The blocking device may be a carrying utensil. In other words, the blocking device may be used for moving the supporting body.

Some embodiments further comprise the cable for carrying electricity, fluid and/or data.

In some embodiments, the supporting body of the protector is attached to the cable; a portion of the cable is within the groove of the cover; the blocking device is within the groove of the cover; the second opening is above the narrow portion; and the blocking device is in contact with the narrow portion.

Since the second opening is above the narrow portion, after the blocking device is introduced into the groove through the second opening, the supporting body is lowered (in other words, descends) until the blocking device rests on narrow portion.

Upon reaching the narrow portion, the blocking device (and hence the cable, which is attached to the supporting body) rests on the narrow portion, the narrow portion exerting a force on the blocking device having a direction opposite to the direction of the gravity force due to the weight of the supporting body and of at least a portion of the cable. The narrow portion prevents that the blocking device (and hence the cable) moves downward (i.e., goes through the narrow portion) because of the force due to the weight.

In some embodiments, the supporting body is an assembly of at least two parts. A supporting body comprising at least two parts facilitates attaching the supporting body to a portion of a cable. This also allows, for example, that the supporting body may be installed with the cable connected (e.g. plugged).

In some embodiments, the cable comprises an armor, the armor comprising strips (more in particular, wires), the strips being outwardly bendable; the supporting body (e.g., the device, of the supporting body, attachable to the cable) comprising a clamp for attaching the supporting body to the cable by pressing outwardly bent strips of the armor of the cable.

An armor is a typical component of cables when requiring mechanical strength and protection from external mechanical perturbances. Therefore, pressing the outwardly bent strips may be a convenient way of attaching the supporting body to cables which are already installed on an alternative protector or which are not attached to any protector.

In some examples of direct attachment of the blocking device to the cable, the cable comprises an armor, the armor comprising strips, the strips being outwardly bendable; the blocking device comprising a clamp for attaching the blocking device to the cable by pressing outwardly bent strips of the armor of the cable. In some embodiments, the cover is attached to a supporting structure of a wind turbine, the supporting structure and the cover being at least partially submerged in water.

In some embodiments, the first opening of the cover is not obstructed (e.g., by the supporting structure of the wind turbine). Thereby, the first opening is accessible after attaching the cover to the supporting structure, thereby enabling that the cable is introduced within the groove after the cover is attached to the supporting structure of the wind turbine.

In some embodiments, the cover is I-shaped. The cover may be an I-tube provided with the groove.

In some embodiments, the protector comprises a stabilizer; the supporting body comprises means for attaching holding means to the supporting body; the stabilizer is attached to a portion of the cable; the stabilizer is within the groove of the cover; the stabilizer comprises a section perpendicular to a longitudinal direction of the cable, the section of the stabilizer having a direction outwards from the cable; the stabilizer is above the supporting body; the stabilizer comprises through holes for holding means; and the cover comprises at least one opening for introducing the stabilizer into the groove.

The stabilizer allows minimizing friction between the cable and the cover both during installation process and when the cable is already installed in the cover. A reason for this is that the stabilizer is between the cable and the cover, so that the stabilizer absorbs impacts with the cover that the cable could suffer if the stabilizer were not present.

Once the stabilizer is introduced into the groove through the opening for introducing the stabilizer, the stabilizer can move within the groove until the blocking device reaches the narrow portion. Preferably, the stabilizer has a shape complementary to a shape of the groove, so that the groove guides movement, within the groove, of the stabilizer.

A groove that guides movement of the stabilizer allows minimizing force of impacts between the stabilizer and the cover and undesired cable movements in the installation of the cable in the protector. In addition, the complementary shapes allow decreasing movement of the cable and force of impact of the stabilizer with the cover when the cable is already installed in the protector.

The through holes of the stabilizer allow that holding means (e.g., wires, chains and/or ropes) go through the stabilizer, and also allow decreasing weight of the stabilizer (i.e., by reducing mass of the stabilizer).

In some embodiments, the stabilizer is an assembly of at least two parts. A stabilizer comprising at least two parts facilitate attaching the stabilizer to a portion of a cable. This also allows, for example, that the stabilizers may be installed with the cable connected (e.g. plugged).

In some embodiments, the opening for introducing the stabilizer into the groove is the second opening. Thereby, the second opening can be used for introducing the stabilizer and the blocking device, thereby dispensing with the need to create an additional opening specifically for the stabilizer.

In some embodiments, the protector comprises several stabilizers along a length portion of the cable, the stabilizers being at a distance from each another.

Attaching separated stabilizers to a length portion of the cable allows minimizing even more undesired movements of the cable and force of impact of the stabilizers with the cover, and at the same time allows minimizing weight compared to attaching only one stabilizer that covers the whole length portion of the cable.

A second aspect of the disclosure relates to a method for protecting a portion of a cable with a protector, the cable being an underwater cable for carrying electricity, fluid and/or data, the protector comprising:
- a cover comprising a first open end for receiving the cable and a second open end for receiving the cable; the cover comprising a groove from the first end to the second end; the groove being for housing a portion of the cable; the groove comprising a first opening of the cover from the first end of the cover to the second end of the cover, the first opening being for introducing a portion of the cable into the groove; and
- a supporting body for supporting the cable, the supporting body comprising a blocking device; the supporting body being attached to the cable so that the blocking device comprises a section having a direction outwards from the cable;

- wherein the groove comprises a narrow portion;
- the cover comprising a second opening for introducing the blocking device into the groove, the second opening being above the narrow portion;
   the method comprising:
   i) introducing the blocking device into the groove through the second opening and introducing a portion of the cable into the groove through the first opening; and
   ii) lowering the blocking device through the groove until the blocking device rests on the narrow portion;
   wherein ii) is performed after i).

Thereby, the cable may be installed in the protector.

In some embodiments, the supporting body is assembled and attached to the cable by joining at least two parts of the supporting body to the cable.

In some embodiments, an outer layer of the cable is removed to uncover strips (e.g., wires); the uncovered strips comprising uncovered strip ends, or cutting an uncovered portion of the strips to generate strip ends; and each strip end of the strip ends is bent (e.g., at an angle of substantially 90 degrees with respect to the original direction of the respective strip).

In some embodiments, the strips are bent at an angle of at least 15 degrees and of at most 90 degrees with respect to the original direction of the respective strip.

By bending the strips, the strips may be attached to the at least two parts of the supporting body (thereby attaching the supporting body to the cable), for example, by pressing the strip ends between adjacent parts of the at least two parts of the supporting body, forming a clamp for clamping the cable.

In some embodiments, the supporting body comprises means for attaching holding means to the supporting body; the method comprising:
a) attaching holding means to the means for attaching holding means to the supporting body;
   performing i) by moving the holding means; and
   performing ii) by lowering the holding means;
   wherein a) is performed before i).

In some embodiment, the method comprises pulling the holding means to raise the supporting body to a height of the second opening. The holding means may be pulled by pulling means (e.g., a crane).

In some embodiments, lowering the holding means comprises releasing the holding means.

In some embodiments, the protector comprises a stabilizer; the stabilizer being attached to a portion of the cable; the stabilizer comprising a section perpendicular to a longitudinal direction of the cable, the section of the stabilizer having a direction outwards from the cable; the stabilizer being above the supporting body; the stabilizer comprising through holes for the holding means; the cover comprising at least one opening for introducing the stabilizer into the groove; the opening for introducing the stabilizer being above the narrow portion; wherein a) further comprises introducing the holding means through the through holes of the stabilizer, wherein ii) comprises introducing the stabilizer into the groove through the opening for introducing the stabilizer.

In some embodiments, the method comprises detaching the holding means from the means for attaching the holding means to the supporting body.

In some embodiments, the holding means are not detached from the means for attaching the holding means to the supporting body. Leaving the holding means attached to the supporting body allows removing the blocking device from the cover in a relatively quick manner if needed after installation, since the holding means are already in place for raising the supporting body by pulling the holding means.

### BRIEF DESCRIPTION OF THE DRAWINGS

To complete the description and to provide for a better understanding of the disclosure, a set of drawings is provided. Said drawings form an integral part of the description and illustrate embodiments of the disclosure, which should not be interpreted as restricting the scope of the disclosure, but just as examples of how the disclosure can be carried out. The drawings comprise the following figures:
Figures 1 and 2 show a protector known in the art attached to a supporting structure of an offshore wind turbine.
Figure 3 shows a cover according to some embodiments of the disclosure.
Figure 4 shows a supporting body attached to a cable according to some embodiments of the disclosure.
Figure 5 shows a partially disassembled supporting body partially attached to a cable according to some embodiments of the disclosure.
Figure 6 shows a cover and a cable attached to a supporting body and to stabilizers according to some embodiments of the disclosure.
Figure 7 shows a stabilizer attached to a cable according to some embodiments of the disclosure.
Figures 8 to 12 show different stages of a method for installing a cable in a protector according to some embodiments of the disclosure.
Figure 13 shows an enlarged view of the second end of the cover of figure 12.
Figures 14 and 15 show supporting bodies and a narrow portion of the groove having convex and concave shapes respectively according to some embodiments of the disclosure.
Figures 16 and 17 show an example of a supporting body according to some embodiments of the disclosure.

### DETAILED DESCRIPTION

The following description is not to be taken in a limiting sense but is given solely for the purpose of describing the broad principles of the invention. Embodiments of the invention will be described by way of example, with reference to the above-mentioned drawings.

The skilled person understands that the embodiments below could relate to a fluid-carrying cable or to a data-carrying cable instead of to an electricity-carrying cable.

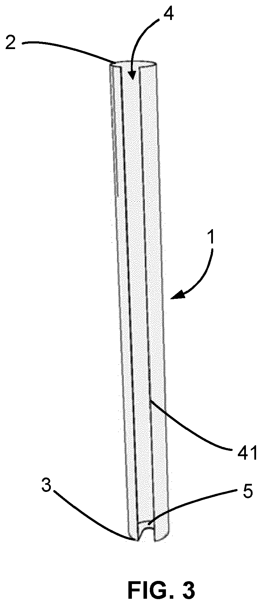

Figure 3 shows a cover 1, in particular an elongated cover, of a protector for a portion of an underwater electricity-carrying cable. The cover 1 is, for example, for a cable carrying electricity generated by an offshore wind turbine to the electricity mains or to another offshore platform. The cover 1 may be made of steel.

The cover 1 can be attached to a structure (e.g., a floating platform) supporting a tower of an offshore wind turbine. For example, the cover 1 may be attached to the structure, so that the cover does not move with respect to the structure. More particularly, the cover 1 may be welded to the structure. For example, the cover 1 may be attached to a same place of a supporting structure of a wind turbine as the place of attachment of the supporting structure to the I-tube of figures 1 and 2.

The cover 1 comprises a groove 4. The groove 4 defines an opening 41 of the cover 1. The opening 41 of the cover 1 extends from a first end 2 of the cover 1 to a second end 3 of the cover 1. In a ready-for-use configuration of the cover 1 (e.g., a cover already attached to the supporting structure of an offshore wind turbine), the first end 2 is above the second end 3. The groove 4 is narrowed at the second end 3. In particular, the groove 4 has a narrow portion 5 being a lower lid 5 comprising a slot. The lid may be attached to the cover 1, so that the narrow portion 5 does not move with respect to the cover 1.

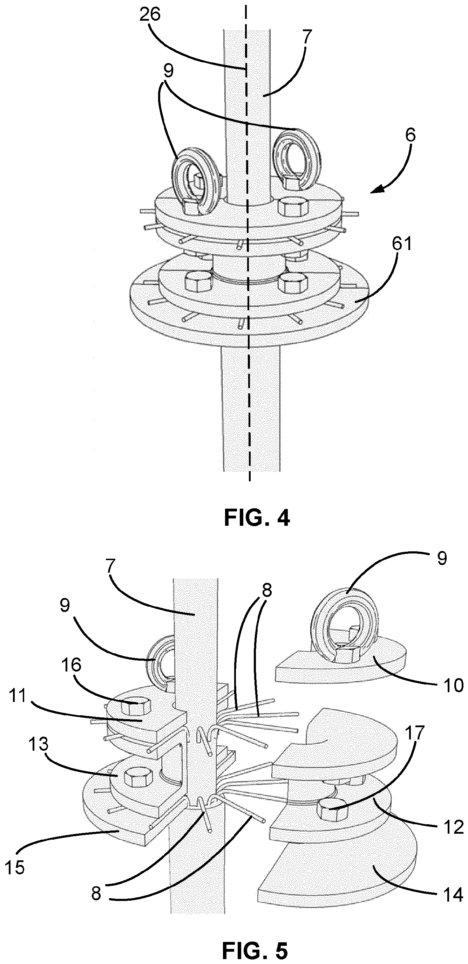

Figure 4 shows an example of a cable 7 attached to a supporting body 6.

The supporting body 6 comprises a section in a plane perpendicular to the longitudinal direction 26 of the cable, the section of the supporting body 6 extending outwards from the cable 7 (the section extends in a direction perpendicular to the longitudinal direction 26 of the cable 7 and outwards from the cable 7). In other words, the supporting body is wider than the cable 7.

The longitudinal direction 26 of the cable 7 is the direction of a dimension of length of the cable. A longitudinal direction of the cover 1 is the longitudinal direction 26 of the cable 7 when the cable 7 is already installed in the protector. The longitudinal direction of an I-shaped cover goes from the first end 2 to the second end 3 of the cover. The longitudinal direction 26 of the cable 7 is not necessarily only one direction for the whole portion of the cable 7 introduced in the groove 4 (i.e., one or more portions of the cable 7 may be curved, e.g., because the cover 1 is curved). In the present disclosure, the term width refers to a dimension perpendicular to the longitudinal dimension 26 of the cable 7.

Figure 4 also shows that the supporting body 6 comprises means for attaching wires 20 (or for attaching other holding means, for example, chains or ropes) to the supporting body 6. The means for attaching wires may be loops 9 to which wires 20 may be attached.

Figure 4 shows that the supporting body 6 comprises a blocking device 61.

Figure 5 shows an example of how a supporting body 6 may be attached to the cable 7. In particular, figure 5 shows that the supporting body 6 may be attached to the cable 7 by pressing strips of an armor of the cable 7.

Prior to attaching the supporting body 6 to the cable 7, the cable 7 may be peeled to make armor strips 8 accessible from the outside of the cable 7. Then, the strips may be bent outwards from the cable 7 (figure 5 shows strips 8 already bent). In the shown embodiment, the strips 8 are bent to form an angle of about 90 degrees with respect to the longitudinal direction 26 of the cable 7.

The supporting body 6 is an assembly comprising parts 10, 11, 12, 13, 14, 15. A first piece 10 comprises a clamping plate. A second piece 11 comprises a clamping plate 11, a third piece 12 comprises two clamping plates, a fourth piece 13 comprises two clamping plates, a fifth piece 14 comprises a clamping plate and a sixth piece 15 comprises a clamping plate. The supporting body 6 is attached to the cable 7 by pressing armor strips between each two adjacent clamping plates of the assembly. Each pair of adjacent clamping plates may be joined to press amor strips by, for example, screwing a screw 16, 17 into a threaded hole (e.g., a nut).

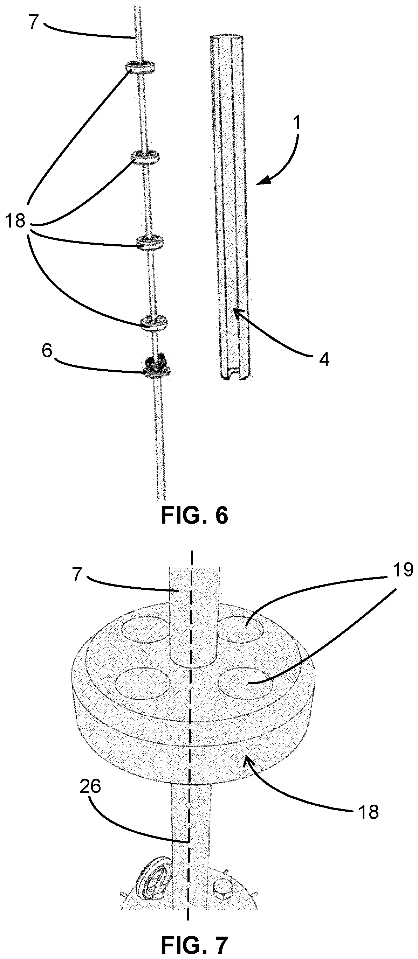

Figure 6 shows the cover 1, the supporting body 6 attached to the cable 7, and several stabilizers 18 attached to the cable 7. Each stabilizer 18 is joined to a length of the cable 7 separated from the lengths of the cable 7 attached to other stabilizers 18 and from the length of the cable attached to the supporting body 6. More particularly, each stabilizer 18 is attached to a length of the cable 7 located above the length of the cable 7 attached to the supporting body 6.

The stabilizers 18 may be made of a light material, for example, PVC or polyethylene.

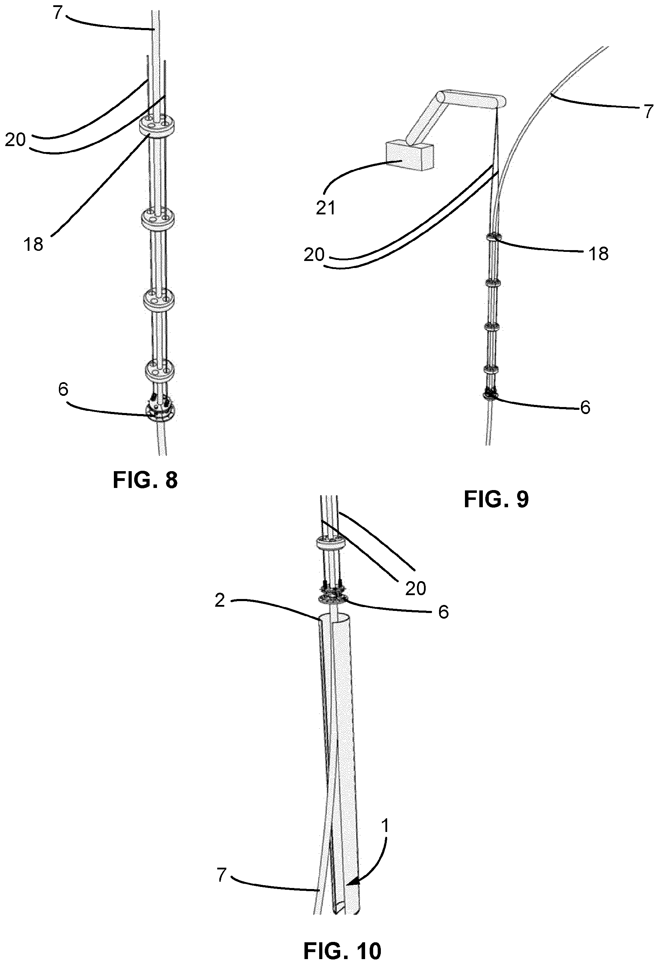

Figure 6 and, for example figure 10, shows that the first opening 41 is wider than the cable 7. Thereby, the cable 7 is narrow enough with respect to the first opening 41 to be introduced into the groove 4 of the cover 1 through the first opening 41. The width of the first opening 41 is a dimension of parallel to a width (e.g., a diameter) of the cable 7.

Figure 7 shows an enlarged view of a stabilizer 18 attached to the cable 7. The stabilizer 18 has through holes 19 for introducing wires 20 (shown in figure 8), or other type of holding means, through the through holes 19.

The stabilizer 18 comprises a section in a plane perpendicular to the longitudinal direction 26 of the cable, the section of the stabilizer 18 extending outwards from the cable 7 (i.e., the section extends in a direction perpendicular to the longitudinal direction 26 of the cable 7 and outwards from the cable 7). In other words, the stabilizer 18 is wider than the cable 7.

Figure 8 shows that wires 20 have been attached to the loops 9 of the supporting body 6. The wires 20 go through through-holes 19 of the stabilizers 18.

As shown in figure 9, the wires 20 may be pulled by a crane 21.

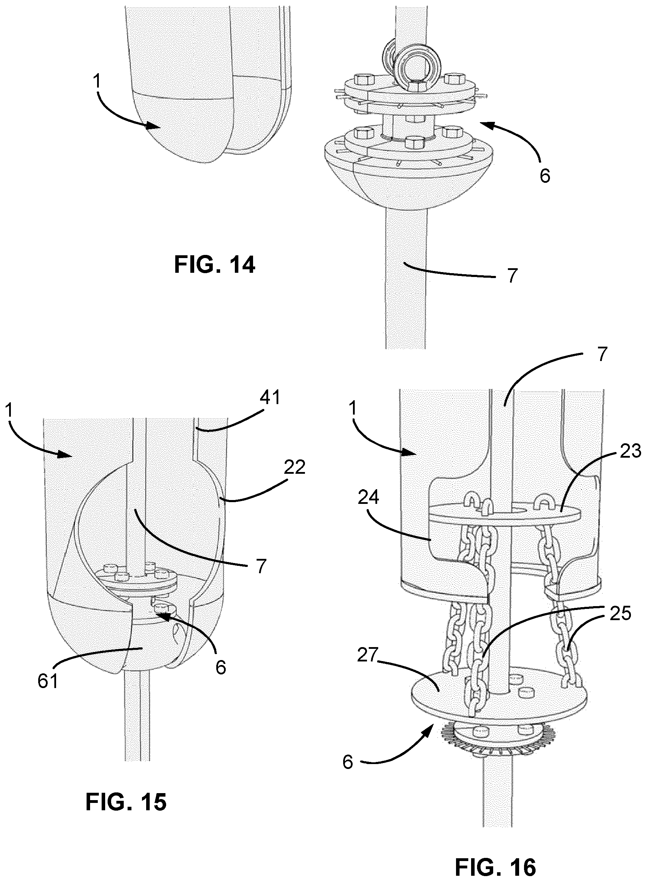

As shown in figure 10, the wires may be pulled by a crane 21 to a position close to a second opening of the cover 1 for introducing the supporting body 6 into the groove 4 (although in other embodiments not all the supporting body is introduced into the groove). In figure 10, the second opening is the first end 2 of the cover 1 (however, in some embodiments the cover 1 comprises a second opening being an enlarged portion of the first opening 41; see, e.g., second opening 22 of figure 15). As shown in figure 10, a portion of the cable 7 may be introduced into the groove 4 before introducing the supporting body 6 into the groove 4.

As shown in figure 10, to be able to introduce the cable 7 into the groove 4, the first opening 41 is directly connected with the first open end 2, so that a continuous opening is formed by both the first opening 41 and the first open end 2.

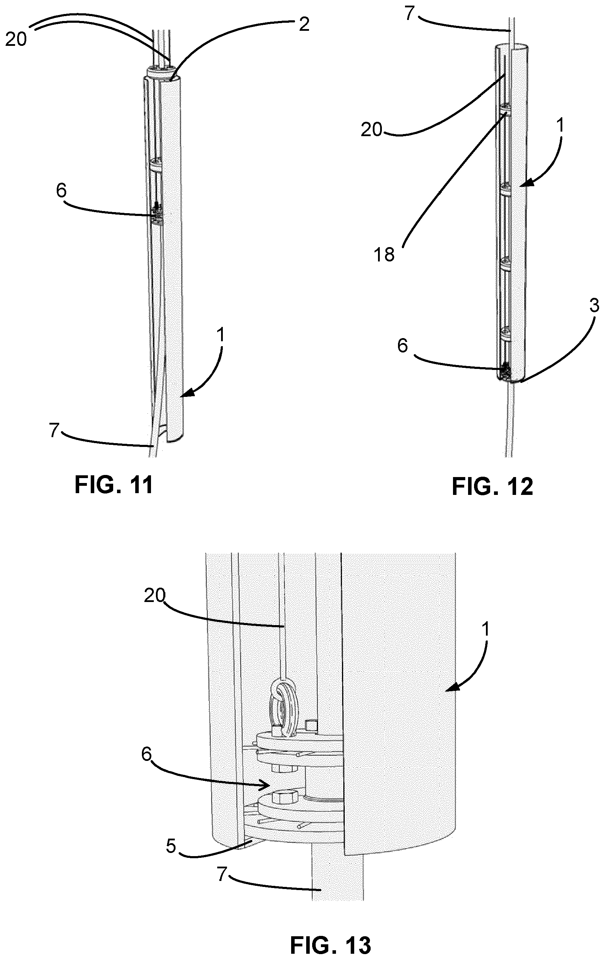

As shown in figure 11, the blocking device 61 is introduced into the groove 4 through the first open end 2 by lowering the wires 20 (e.g., from the position illustrated in figure 10). For being able to introduce the blocking device 61 through the first open end 2, the first open end 2 is wider than the blocking device 61.

As shown in figure 11, after introducing the blocking device 61, the wires 20 descend, so that the blocking device 61 descends within the groove 4. For being able to descend within the groove 4 from the second end, the groove 4 is wider than the blocking device 61 from the second opening (i.e., the opening for introducing the blocking device 61) to the narrow portion 5 of the groove 4. Preferably, the groove 4 is slightly wider than the blocking device 61 and the first opening 41 is narrower than the blocking device 61 between the second opening and the narrow portion, so that the groove 4 guides the blocking device 61 in the descent/lowering of the blocking device 61 within the groove 4.

As shown in figure 11, the stabilizers 18 are also introduced into the groove 4 through the first open end 2. For being able to introduce the stabilizers through the first open end 2, the first open end 2 is wider than the stabilizers 18. For being able to descend within the groove 4 from the second end, the groove 4 is wider than the stabilizers 18 from the opening for introducing the stabilizers 18 (in this case, the first open end 2) to the narrow portion 5 of the groove 4. Preferably, the groove 4 is slightly wider than the stabilizers 18, so that the groove 4 guides the stabilizers 18 in the descent of the stabilizers 18 within the groove 4.

As shown in figures 12 and 13, the supporting body 6 is lowered (e.g., by lowering the wires 20) until the blocking device 61 rests on the narrow portion 5. The narrow portion 5 shown in figures 3, 12 and 13 is the lower lid comprising a slot. The narrow portion 5 prevents the supporting body (and particularly, the blocking device 61) from being lowered further. In particular, to block the downwards movement of the blocking device 61 through the groove 4, the blocking device 61 is wider than the groove 4 at the narrow portion 5. In addition, for enabling that the cable 7 exits the cover 1 without being subjected to relatively high stress, the narrow portion 5 comprises a slot suitable for the cable 7 to go through the slot. In particular, the slot is wider than the cable 7.

Thereby, the cable 7 may be installed in the protector. In the installed configuration, the blocking device 61 rests on the narrow portion 5. The supporting body 6 may support the weight of the cable 7 and the weight of the stabilizers 18; and the narrow portion 5 may support the weight of the cable 7, the weight of the stabilizers 18 and the weight of the supporting body 6. The supporting body 6 and the narrow portion 5 may also support stress caused by movement of the structure to which the cover is attached (e.g., stress of movement of a floating platform) due to, e.g., waves and/or wind.

In addition, preferably (as can be understood from figure 15), the second opening is above from and at a distance from the narrow portion to make it more difficult that the blocking device 61 leaves the groove 4 through the second opening due to movement caused by disturbances (e.g., wind, waves, and/or tide changes).

As shown in figures 14 and 15, the narrow portion 5 does not need to comprise a flat surface on which the blocking device 61 rests, and the blocking device 61 does not need to comprise a flat surface for resting on the narrow portion 5. For example, the blocking device 61 may comprise a convex surface for resting on the narrow portion 5, and the narrow portion 5 may comprise a concave surface on which the blocking device 61 rests.

Figure 15 shows a second opening 22 being an enlarged portion of the first opening 41. The blocking device 61 is introduced into the groove 4 through the second opening 22. For being able to introduce the blocking device 61 through the second opening 22, the second opening 22 is wider and longer than the blocking device 6.

As shown in figure 16, the supporting device 6 may have a different configuration. In particular, the supporting device 6 may comprise a blocking device 23, hanging means 25 and a device 27 attachable to the cable 7, wherein the device 27 is attached to the blocking device 23 with the hanging means 25. In this way, the device 27 hangs from the blocking device 23.

As shown in figure 16, the blocking device may comprise a hole wider than the cable 7, so that the cable may move to some degree with respect to the blocking device 23. In this way, the cable 7 does not contact the blocking device 23 when the cable 7 performs small movement and hence wear of the cable 7 under these circumstances is minimized.

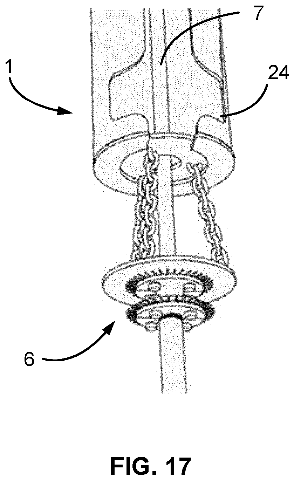

As shown in figure 16, the cable 7 may be introduced into the groove 4 by introducing the blocking device 23 through the second opening 24 into the groove 4. Subsequently, the blocking device 61 is lowered until the blocking device 61 rests on the narrow portion 5, as shown in figure 17.

As shown in figure 17, the narrow portion 5 is wide enough to enable that the holding means and the cable 7 go through the narrow portion 5.

As shown in figure 17, the second opening 24 ends before the narrow portion 5, so that a width of the blocking device 23 is greater than a width of the first opening 41 between the second opening 24 and the narrow portion 5.

As shown in figure 17, the blocking device 23 has a planar surface for resting on a planar surface of the narrow portion 5 when the blocking device 23.

The movement of the blocking device 23 may be achieved by attaching holding means to the blocking device 23 and moving the holding means similarly as described in reference to figures 9 and 15. For example, the holding means may be attached to the blocking device 23, so that the blocking device 23 acts as a device that carries the rest of the supporting body 6, in other words, as a carrying utensil.

In this text, the term "comprises" and its derivations (such as "comprising", etc.) should not be understood in an excluding sense, that is, these terms should not be interpreted as excluding the possibility that what is described and defined may include further elements, steps, etc.

On the other hand, the disclosure is obviously not limited to the specific embodiment(s) described herein, but also encompasses any variations that may be considered by any person skilled in the art (for example, as regards the choice of materials, dimensions, components, configuration, etc.), within the general scope of the invention as defined in the claims.

## Claims

1. A protector for a portion of an underwater electricity-carrying, fluid-carrying and/or data-carrying cable, the protector comprising:
- a cover (1) comprising a first open end (2) for receiving a cable (7) and a second open end (3) for receiving a cable (7); the cover comprising a groove (4) from the first end (2) to the second end (3); the groove (4) being for housing a portion of a cable; the groove (4) comprising a first opening (41) of the cover (1) from the first end (2) of the cover to the second end (3) of the cover, the first opening (41) being for introducing a portion of a cable into the groove (4); and
- a supporting body (6) for supporting a cable, the supporting body (6) comprising a blocking device (61, 23); the supporting body (6) being attachable to a cable so that when the supporting body (6) is attached to the cable the blocking device (61, 23) comprises a section having a direction outwards from the cable (7);
wherein the groove (4) comprises a narrow portion (5); the cover (1) comprises a second opening for introducing the blocking device (61, 23) into the groove (4); the blocking device (61, 23) being small enough with respect to the groove to move within the groove from the second opening to the narrow portion (5) of the groove.

2. The protector of claim 1, wherein the second opening is the first open end (2) or the second opening is an enlarged portion (22) of the first opening (4).

3. The protector of any one of the previous claims, wherein the narrow portion (5) of the groove (4) is at the second end (3) of the cover (1).

4. The protector of any one of the previous claims, wherein:
- the blocking device (61) comprises a convex outer surface; and
- the narrow portion (5) has a concave outer surface for contacting the convex outer surface of the blocking device (61).

5. The protector of any one of the previous claims, wherein the blocking device (61) is directly attachable to a cable (7).

6. The protector of any one of claims 1 to 5 wherein the supporting body comprises hanging means (25) and a device attachable to a cable (7) for attaching the blocking device to a cable, wherein the hanging means (23) attach the blocking device (23) to the device (27) attachable to a cable (7).

7. The protector of any one of the previous claims and an underwater cable (7) for carrying electricity, fluid and/or data, wherein the supporting body (6) of the protector is attached to the cable (7); a portion of the cable (7) is within the groove (4) of the cover; the blocking device (6) is within the groove (4) of the cover; the second opening is above the narrow portion (5); and the blocking device (61) is in contact with the narrow portion (5).

8. The protector and the cable (7) of claim 7, the cable (7) comprising an armor, the armor comprising strips (8), the strips (8) being outwardly bendable; the supporting body (6) comprising a clamp for attaching the supporting body (6) to the cable (7) by pressing outwardly bent strips (8) of the armor of the cable (7).

9. The protector and the cable (7) of claim 7 or 8, wherein the cover (1) is ai (103) of a wind turbine (101), the supporting structure (103) and the cover (1) being at least partially submerged in water (104).

10. The protector and the cable (7) of any one of claims 7-9, wherein the cover is I-shaped.

11. The protector and the cable (7) of any one of claims 7-10, the protector comprising a stabilizer (18); the supporting body (6) comprising means for attaching (9) holding means (20) to the supporting body (6); the stabilizer (18) being attached to a portion of the cable (7); the stabilizer (18) being within the groove (4) of the cover (1); the stabilizer (18) comprising a section perpendicular to a longitudinal direction (26) of the cable (7), the section of the stabilizer having a direction outwards from the cable (7); the stabilizer (18) being above the supporting body (6); the stabilizer (18) comprising through holes (19) for holding means (20); and the cover (1) comprising an opening for introducing the stabilizer (18) into the groove (4).

12. A method for protecting a portion of a cable (7) with a protector, the cable (7) being an underwater cable for carrying electricity, fluid and/or data, the protector comprising:
- a cover (1) comprising a first open end (2) for receiving the cable (7) and a second open end (3) for receiving the cable (7); the cover comprising a groove (4) from the first end (2) to the second end (3); the groove (4) being for housing a portion of the cable; the groove (4) comprising a first opening (41) of the cover (1) from the first end (2) of the cover to the second end (3) of the cover, the first opening (41) being for introducing a portion of the cable into the groove (4); and
- a supporting body (6) for supporting the cable, the supporting body (6) comprising a blocking device (61, 23); the supporting body (6) being attached to the cable (7) so that the blocking device (61, 23) comprises a section having a direction outwards from the cable (7);
- wherein the groove comprises a narrow portion (5),;
- the cover (1) comprising a second opening for introducing the blocking device (61, 23) into the groove (4), the second opening being above the narrow portion (5); the method comprising:
i) introducing the blocking device (61, 23) into the groove (4) through the second opening and introducing a portion of the cable (7) into the groove (4) through the first opening (41); and
ii) lowering the blocking device (61, 23) through the groove (4) until the blocking device (61, 23) rests on the narrow portion (5);
wherein ii) is performed after i).

13. The method of claim 12, wherein the supporting body (6) comprises means for attaching holding means (20) to the supporting body (6); the method comprising:
a) attaching holding means (20) to the means for attaching holding means to the supporting body (6);
performing i) by moving the holding means (20); and
performing ii) by lowering the holding means (20);
wherein a) is performed before i).

14. The method of claim 13, the protector comprising a stabilizer (18); the stabilizer (18) being attached to a portion of the cable (7); the stabilizer (18) comprising a section perpendicular to a longitudinal direction (26) of the cable (7), the section of the stabilizer having a direction outwards from the cable (7); the stabilizer (18) being above the supporting body (6); the stabilizer (18) comprising through-holes (19) for the holding means (20); the cover (1) comprising an opening for introducing the stabilizer (18) into the groove (4); the opening for introducing the stabilizer (18) being above the narrow portion (5); wherein a) further comprises introducing the holding means (20) through the through holes (19) of the stabilizer (18), wherein ii) comprises introducing the stabilizer (18) into the groove (4) through the opening for introducing the stabilizer (18).
